# EUROPÄISCHE PATENTSCHRIFT

(11) **EP 2 954 364 B1**
(45) Veröffentlichungstag und Bekanntmachung des Hinweises auf die Patenterteilung: **07.10.2020**
(21) Anmeldenummer: 14704549.6
(22) Anmeldetag: 05.02.2014
(51) Int. Cl.: G02B 26/06, G02B 27/00

(54) **VERFAHREN UND VORRICHTUNG ZUM EMPFANGEN UND VERARBEITEN DER VON EINEM AUSGEDEHNTEN OBJEKT KOMMENDEN OPTISCHEN SIGNALE**
METHOD AND DEVICE FOR RECEIVING AND PROCESSING THE OPTICAL SIGNALS COMING FROM AN EXTENDED OBJECT
PROCÉDÉ ET DISPOSITIF DESTINÉS À RECEVOIR ET TRAITER LES SIGNAUX OPTIQUES EN PROVENANCE D'UN OBJET VOLUMINEUX

(30) Priorität: 06.02.2013 DE 102013002007
(43) Veröffentlichungstag der Anmeldung: 16.12.2015
(73) Patentinhaber: Rheinmetall Waffe Munition GmbH, 29345 Unterlüss (DE)
(72) Erfinder: GOWIN, Michael, 29320 Hermannsburg (DE); TEN HAVE, Eric, 10178 Berlin (DE)
(74) Vertreter: Dietrich, Barbara
(86) Internationale Anmeldenummer: PCT/EP2014/052210
(87) Internationale Veröffentlichungsnummer: WO 2014/122156

(56) Entgegenhaltungen:
- US-A- 5 448 053
- US-A1- 2006 022 115
- US-A1- 2007 253 057

## Beschreibung

Die Erfindung betrifft eine Erweiterung eines Bildfeldes unter Turbulenzeinfluss, insbesondere jedoch ein Verfahren zum Empfangen und Verarbeiten der von einem ausgedehnten Objekt, beispielsweise einem Flugkörper, kommenden optischen Signale mittels einer eine adaptive Optik umfassenden optischen Vorrichtung, wobei die adaptive Optik die beim Passieren der Atmosphäre aufgrund von Brechungsindex-Schwankungen der Luft auftretenden Störungen der Wellenfronten der optischen Signale kompensiert. Die Erfindung bezieht sich ferner auf eine optische Vorrichtung zur Durchführung dieses Verfahrens.

Im Internet (http://de.wikipedia.org/wiki/Adaptive Optik) wird bei Wikipedia unter dem Stichwort "Adaptive Optik" eine Technik beschrieben, die die Qualität optischer Systeme dadurch verbessert, dass sie vorhandene Wellenfrontstörungen bestmöglich reduziert bzw. kompensiert. Dabei besteht die adaptive Optik im Wesentlichen aus mindestens einem deformierbaren Spiegel zum Ausgleich der atmosphärischen Wellenfrontstörungen (Phasenstörungen), mindestens einem Wellenfrontsensor zur Messung der verbleibenden Störungen der Wellenfront und einem Online-Computer (Regelkreis-Elektronik), der aus den gemessenen Wellenfrontstörungen Korrektursignale berechnet, mit denen der deformierbare Spiegel derart angesteuert wird, dass sich eine korrigierte Wellenfront ergibt. Dabei muss die Messung und anschließende Korrektur der Wellenfrontstörungen innerhalb eines Zeitintervalls durchgeführt werden, bei dem die Atmosphäre mitsamt ihren Turbulenzen als statisch angesehen werden kann (sogenannte atmosphärische Zeitkonstante, die in der Größenordnung von Millisekunden liegt).

Insbesondere Lasersysteme zur Schaffung eines (Hochleistungs-)Laserwaffen umfassen unter anderem eine adaptive Optik, wie beispielsweise in der DE 10 2010 051 097.21 angegeben. Die Schlüsselkomponenten für die funktionsgerechte Arbeitsweise des Lasersystems insbesondere als Laserwaffe oder Waffenlaser sind hierbei ein Aufklärungssystem, beispielsweise ein Radar, ein Feinimaging zum Aufklären des verwundbaren Punktes des Ziels, ein Grob- und ein Feintracker, eine Strahlformung, ein Beleuchtungslaser und der eigentliche Hochenergielaser- die Laserquelle.

Ein häufiger Nachteil bei dem bekannten Verfahren liegt allerdings darin, dass eine Bildkorrektur nur innerhalb eines relativ kleinen Raumwinkels (Sehfeldabschnittes) möglich ist, der durch den sogenannten isoplanatischen Winkel (maximaler Abstandswinkel zwischen zwei Punkten, für den man annehmen kann, dass Lichtstrahlen, die von diesen Punkten ausgehen, dieselbe turbulente Atmosphäre sehen) bestimmt ist. Aufgrund der Ausdehnung der Teleskopöffnung und der üblicherweise verwendeten Wellenlänge des Lichtes ist das Sehfeld der Vorrichtung in der Regel aber wesentlich größer als der durch den isoplanatischen Winkel bestimmte Sehfeldabschnitt, sodass auch nur ein relativ kleiner Bildfeldabschnitt des das Objekt zeigenden Bildfeldes des entsprechenden Teleskops durch die adaptive Optik korrigierbar ist. Ein Betrachter sieht daher mit der bekannten optischen Vorrichtung trotz der Verwendung einer adaptiven Optik lediglich einen Teilbereich des Bildes des entsprechenden Objektes scharf, während der verbleibende Bildbereich des Bildes unscharf (verschwommen) erscheint.

Die US 5,448,053 A offenbart ein Bildgebungssystem zum Messen der Feldvarianz verzerrter Lichtwellenleiter. Das Bildgebungssystem sammelt einen Satz von verzerrten kurz belichteten Bildern eines Objekts und wendet eine Datenmethode im digitalen Bereich an, was zu einer Bildschätzung führt.

Der Erfindung liegt die Aufgabe zugrunde, ein Verfahren der eingangs erwähnten Art anzugeben, mit welcher auf einfache Weise ein korrigiertes Gesamtbild eines ausgedehnten Objektes auch dann erzeugt werden kann, wenn das Sehfeld der Vorrichtung wesentlich größer als der durch den isoplanatischen Winkel bestimmte Sehfeldabschnitt ist. Die Erfindung soll ferner eine optische Vorrichtung zur Durchführung dieses Verfahrens offenbaren.

Diese Aufgabe wird erfindungsgemäß hinsichtlich des Verfahrens durch die Merkmale des Anspruchs 1 und hinsichtlich der optischen Vorrichtung durch die Merkmale des Anspruchs 2 gelöst. Weitere, besonders vorteilhafte Ausgestaltungen der Erfindung offenbaren die Unteransprüche.

Die Erfindung beruht im Wesentlichen auf dem Gedanken, eine Unterteilung des dem Sehfeld der optischen Vorrichtung entsprechenden Bildfeldes in einzelne Bildfeldabschnitte vorzunehmen, die sich aneinander anschließen und deren Abmessungen jeweils durch den isoplanatischen Winkel vorgegeben sind (dieses entspricht im Objektraum im wesentlichen einer Überdeckung des abzubildenden Objektes in isoplanatische Teilfläche, wobei jeder isoplanatischen Teilfläche im Bildraum ein korrigierter Bildfeldabschnitt zugeordnet ist). Durch Zusammensetzung der einzelnen Bildfeldabschnitte bzw. der in den Bildfeldabschnitten dargestellten Teilbilder ergibt sich dann ein korrigiertes Gesamtbild des Objektes.

Ein adaptives optisches System kann im Prinzip nur die Fehler eines einzelnen Strahlenganges korrigieren. Dieser Strahlengang wird durch den isoplanatischen Winkel abgegrenzt, außerhalb dessen sich die Fehler entlang des jeweiligen Strahlengangs zu stark unterscheiden, um durch eine einzelne adaptive Optik korrigiert zu werden. Abhilfe könnte hier durch die Verwendung mehrere adaptiver Optiken, sogenannter multikonjugierter adaptiver Optiken geschaffen werden. Bei atmosphärischer Strahlausbreitung hängt die Größe des isoplanatischen Winkels dabei von der Stärke der Turbulenz ab, mit kleineren Winkeln für stärkere Turbulenzen.

Zur Durchführung der Messung und Korrektur der einzelnen Bildfeldabschnitte schlägt daher die Erfindung vor, zwischen dem Strahlteiler und dem Wellenfrontsensor der erfindungsgemäßen optischen Vorrichtung einen durch eine Elektronik ansteuerbaren, um mindestens zwei senkrecht zueinander angeordnete Achsen kippbaren Spiegel (Tip/Tilt-Spiegel) zur Verschiebung der Strahlenachse des von dem Strahlenteiler ausgekoppelten Lichtstrahlbündels auf dem Wellenfrontsensor vorzusehen. Dadurch wird erreicht, dass innerhalb des durch die atmosphärische Zeitkonstante vorgegebenen Zeitabschnittes das Bildfeld der optischen Vorrichtung durch Verschiebung der Strahlenachse des zweiten Lichtstrahlenbündels auf dem Wellenfrontsensor in 'N' aufeinanderfolgenden Zeitintervallen abgetastet und die Wellenfronten der jeweils innerhalb des isoplanatischen Winkels liegenden N Einzelbilder korrigiert werden. Die korrigierten 'N' Einzelbilder werden in dem Speicher eines Computers zunächst zwischengespeichert und anschließend durch den Computer zu einem Gesamtbild zusammengefügt.

Der Wellenfrontsensor vermisst die gesamte Wellenfront, der adaptive Spiegel korrigiert den gesamten Strahl. Dabei misst der Wellenfrontsensor die Wellenfrontfehler, woraus Steuersignale für den adaptiven Spiegel berechnet werden. Es wird der gesamte Strahl vermessen und der gesamte Strahl korrigiert. Ein wohljustiertes System ist so aufgebaut, dass alle Strahlenachsen auf den jeweiligen optischen Komponenten zentriert sind, so dass sowohl die Mitten der Bildfelder von Wellenfrontsensor und Kamera als auch die Mitten von Wellenfrontsensor und adaptiven Spiegel übereinstimmen. Das ist dann nicht zwingend notwendig, wenn das System als solches kalibriert wird.

Durch die Positionierung des zusätzlichen Tip/Tilt-Spiegels vor dem Wellenfrontsensor kann das Blickfeld des Wellenfrontsensors gegenüber dem der Kamera verschoben werden. Da dies nicht in der Kalibrierung enthalten ist, korrigiert das System die Turbulenzen entlang der Strahlenachse des Wellenfrontsensors, die nun nicht mehr mit der ursprünglichen Systemstrahlachse identisch ist. Diese hat für die Kamera, die weiterhin entlang der Systemstrahlachse justiert ist, den Effekt, dass sich der korrigierte Bildausschnitt mit der Bewegung des Tip/Tilt-Spiegels verschiebt. Die Korrektur der Turbulenz und die Verschiebung des Bildfeldes geschehen unabhängig voneinander.

Um ein großflächiges Target nun hochauflösend abzubilden, wird der Kippwinkel des Tip/Tilt-Spiegels an die Größe des isoplanischen Winkels angepasst. Diese Information kann aus dem Wellenfrontdaten bzw. den errechneten Steuerdaten für den adaptiven Spiegel und dem optischen Aufbau (Teleskopvergrößerung, Weglängen innerhalb des Aufbaus etc.) abgeleitet werden.

Weitere Einzelheiten und Vorteile der Erfindung ergeben sich aus den folgenden, anhand von Figuren erläuterten Ausführungsbeispielen. Es zeigen:
- Fig. 1: ein vereinfacht dargestelltes optisches Aufklärungssystem mit einer erfindungsgemäßen Vorrichtung mit adaptiver Optik;
- Fig. 2: die Umrisse eines durch atmosphärische Störungen verzerrten Bildes eines Flugzeuges vor Aktivierung der adaptiven Optik;
- Fig. 3: das in Fig. 2 dargestellte Bild, bei dem eine Unterteilung in 12 Bildfeldabschnitte vorgenommen ist, vor Aktivierung der adaptiven Optik;
- Fig. 4: eine Fig. 3 entsprechende Ansicht nach Aktivierung der adaptiven Optik, wobei die Korrektur der einzelnen Bildfeldabschnitte zeitlich nacheinander erfolgte;
- Fig. 5: eine Fig. 4 entsprechende Ansicht des Flugobjektes nach Zusammenfügen des Bildes durch einen Rechner, wie sie auf einem Bildschirm dargestellt wird.

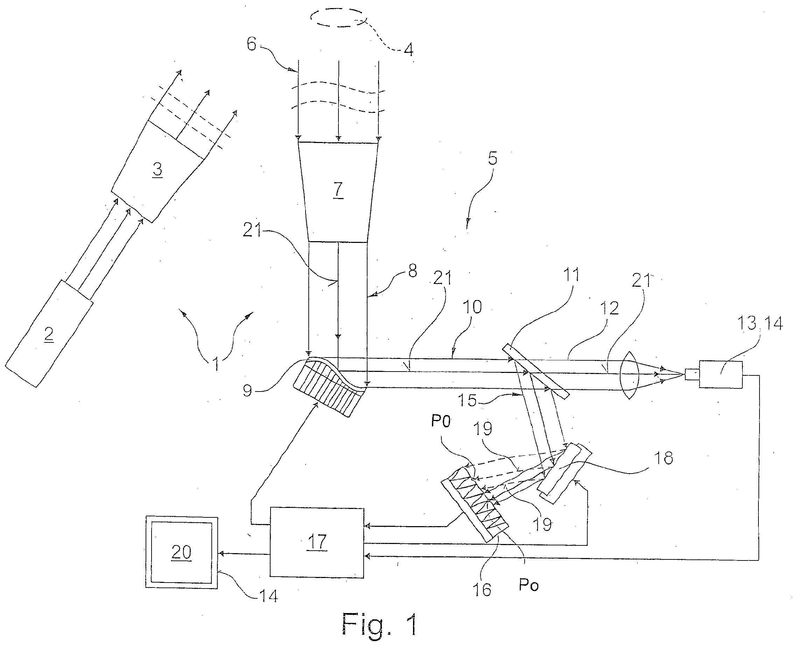

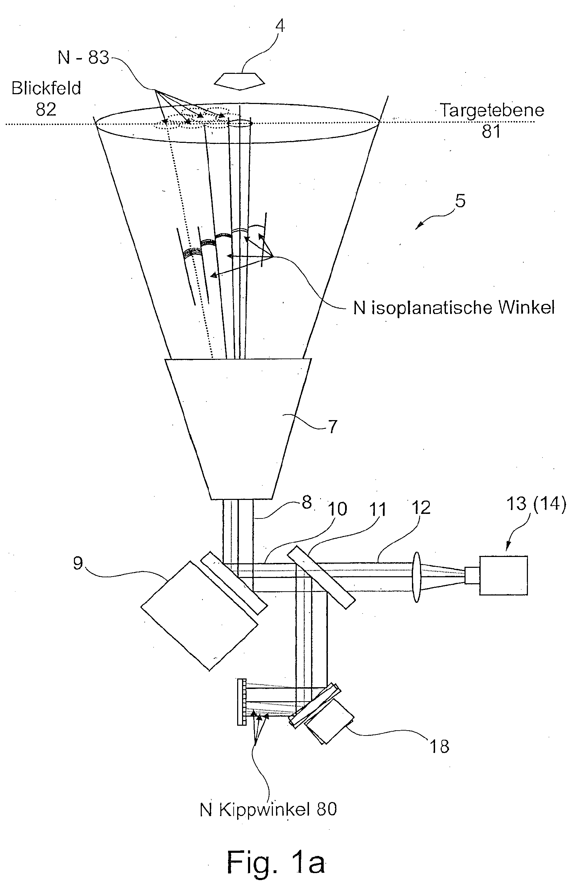

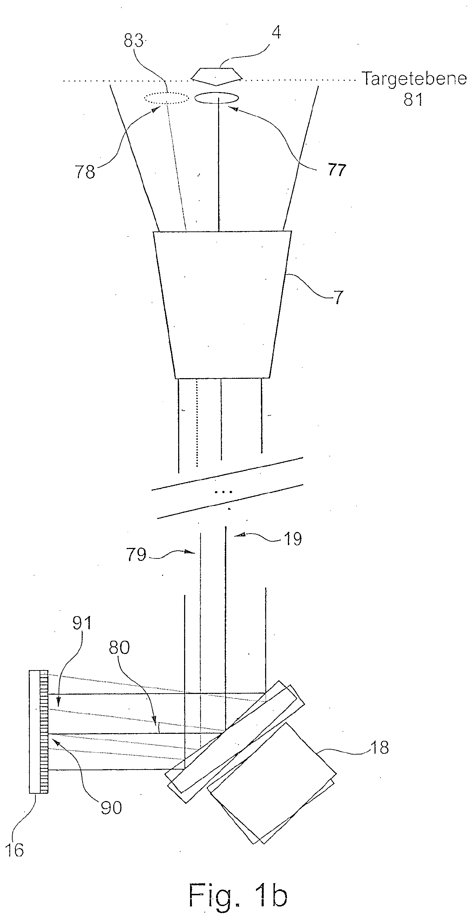

In Fig. 1 ist mit 1 ein optisches Aufklärungssystem von Flugkörpern bezeichnet, welches eine Laserquelle 2 mit einem Beleuchtungsteleskop 3, die ein entsprechendes Objekt (Flugzeug) 4 großflächig ausleuchtet, und eine erfindungsgemäße optische Vorrichtung 5 zum Empfangen und Verarbeiten des von dem Flugzeug 4 reflektierten Laserlichtes 6 umfasst.

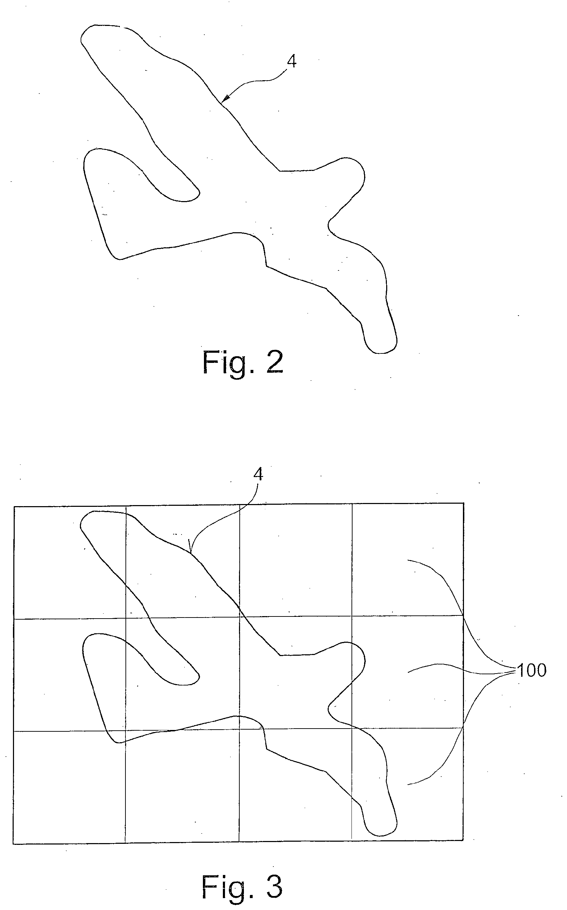

Die optische Vorrichtung 5 enthält ein Empfangsteleskop 7, das aus dem reflektierten Laserlicht 6 ein Lichtstrahlenbündel 8 erzeugt. Da die Wellenfronten des reflektierten Laserlichtes 6 beim Passieren der Atmosphäre aufgrund von Brechungsindex-Schwankungen der Luft Störungen (Verzerrungen) aufweisen, weist auch das Lichtstrahlenbündel 8 entsprechende Wellenfrontstörungen auf. Daher würde ein Beobachter mittels des Empfangsteleskops 7 lediglich ein verzerrtes Bild des Flugzeuges 4 sehen, wie dieses in Fig. 2 angedeutet ist.

Zur Kompensation der Wellenfrontstörungen enthält die optische Vorrichtung 5 eine adaptive Optik 9, wobei ein deformierbarer Spiegel vorgesehen ist, der die atmosphärischen Wellenfrontstörungen ausgleicht. Das von dem deformierbaren Spiegel 9 reflektierte Lichtstrahlenbündel 10 gelangt anschließend zu einem Strahlteiler 11, von dem ein erstes Lichtstrahlenbündel 12 der Kamera 13 einer Beobachtungseinrichtung 14 zugeführt wird. Ein zweites Lichtstrahlenbündel 15 wird von dem Strahlteiler 11 aus dem Lichtstrahlenbündel 10 ausgekoppelt und gelangt zu einem Wellenfrontsensor 16 der adaptiven Optik, welcher die noch verbleibenden Störungen der Wellenfront des zweiten Lichtstrahlenbündels 15 und damit auch des Lichtstrahlenbündels 10 misst.

Die Signale des Wellenfrontsensors 16 werden mittels eines Online-Computers (Regelkreis-Elektronik) 17 in Steuersignale umgesetzt und dem deformierbaren Spiegel 9 zugeführt. Dabei sind der Online-Computer 17 sowie der Wellenfrontsensor 16 und der deformierbare Spiegel 9 derart gewählt, dass die Messung und Korrektur der Wellenfrontstörungen mehrmals innerhalb des durch die atmosphärische Zeitkonstante vorgegebenen Zeitabschnittes (d.h. in der Regel innerhalb einiger Millisekunden) durchgeführt werden.

Erfindungsgemäß ist vorgesehen, dass zwischen dem Strahlteiler 11 und dem Wellenfrontsensor 16 ein durch eine Elektronik (bei dem dargestellten Ausführungsbeispiel handelt es sich um den Online-Computer) 17 ansteuerbarer, um zwei Achsen kippbarer Tip/Tilt-Spiegel 18 angeordnet ist. Mit diesem Spiegel 18 kann das zweite Lichtstrahlenbündel 15 auf dem Wellenfrontsensor 16 verschoben werden. Dadurch ist es möglich, auch Abschnitte des Lichtstrahlenbündels 8, die sich seitlich von der optischen Achse 21 der optischen Vorrichtung 5 befinden (die optische Achse 21 der optischen Vorrichtung 5 entspricht den in Fig. 1 dargestellten Hauptstrahlen der Lichtstrahlenbündel 8, 10 und 12), durch das adaptive System zu korrigieren.

Durch die Positionierung des zusätzlichen Tip/Tilt-Spiegels 18 vor dem Wellenfrontsensor 16 kann das Blickfeld des Wellenfrontsensors 16 gegenüber dem der Kamera 13 verschoben werden. Da dies nicht in der Kalibrierung enthalten ist, korrigiert das System 1 die Turbulenzen entlang der Strahlenachse des Wellenfrontsensors 16, die nun nicht mehr mit der ursprünglichen Systemstrahlachse identisch ist (Fig. 1a). Diese hat für die Kamera 13, die weiterhin entlang der Systemstrahlachse justiert ist, den Effekt, dass sich der korrigierte Bildausschnitt mit der Bewegung des Tip/Tilt-Spiegels 18 verschiebt. Die Korrektur der Turbulenz und die Verschiebung des Bildfeldes geschehen unabhängig voneinander.

Wird beispielsweise die Strahlachse 19 des Lichtstrahlenbündels 15 auf dem Wellenfrontsensor 16 von dem Auftreffpunkt P₀ zu einem seitlich liegenden Auftreffpunkt P₁ verschoben, so liegt die Strahlenachse 19 nicht länger auf dem kalibrieren Auftreffpunkt P₀ und ist nicht länger das Zentrum der Korrektur 77 in der Zielebene 81. Das neue Zentrum der Korrektur 78 wird durch den Strahl 79, der nun auf dem Auftreffpunkt P₀ liegt, definiert. Dieser kann in Abhängigkeit des Kippwinkels 80 eingestellt werden.

Fig. 1b zeigt die verschiedenen Strahlenachsen im System:
91 = Auftreffpunkt der Systemstrahlachse nach Kippung P₁; 90 = Auftreffpunkt der Strahlachse bei Kalibrierung, P₀ - Zentrum des Korrigierten Flecks in der Targetebene 81 ohne Kippung; 79 = Zentrum der korrigierten Flecks; 19 = einfallende Strahlenachse - Systemstrahlachse bzw. Strahlachse der Korrektur und Zentrum des korrigierten Flecks ohne Kippung; 77 = Systemstrahlachse bzw. Strahlachse der Korrektur und Zentrum der korrigierten isoplanatischen Teilfläche 82 ohne Kippung; 78 = Strahlenachse der Korrektur und Zentrum der korrigierten isoplanatischen Teilfläche 83 nach Kippung).

Aus den Sensorsignalen des Wellenfrontsensors 16 erzeugt der Online-Computer 17 Korrektursignale, die eine Auslenkung des deformierbaren Spiegels 9 bewirken. Der adaptive Spiegel korrigiert immer den gesamten Strahl. Der Effekt der Korrektur ist allerdings eventuell turbulenzbedingt auf einen Teil des Bildfeldes um die Systemstrahlachse begrenzt. Durch den zusätzlichen Tip/Tilt-Spiegel 18 wird die Korrekturachse der adaptiven Optik relativ zur Systemachse verschoben. Diese hat selbst keinen Einfluss auf die Funktion der adaptiven Optik.

Durch entsprechende elektronische Ansteuerung des Tip/Tilt-Spiegels 18 kann das Bildfeld des Empfangsteleskops 7 von der Kamera 13 also in einer Anzahl von N Schritten abgetastet und N Einzelbilder aufgenommen werden. Da die N Einzelbilder durch das Verschieben der Strahlachse 19 auf dem Wellenfrontsensor 16 jeweils innerhalb des isoplanatischen Winkels liegen, können diese Bilder einzeln korrigiert werden. Dieser Vorgang wird hochfrequent durchgeführt, so dass die N Einzelbilder innerhalb einer kurzen Zeitspanne aufgenommen werden. Die N Einzelbilder werden dann mittels entsprechender Software durch den Online-Computer 17 bearbeitet und zu einem Gesamtbild zusammengefügt, so dass dadurch ein korrigiertes und damit scharfes Bild des gesamten Flugzeuges 4 erhalten wird und auf dem Bildschirm 20 der Beobachtungseinrichtung 14 darstellbar ist. D.h., durch N Verschiebungen des Blickfeldes 82 wird ein scharfes Gesamtbild aus N korrigierten Teilbildern zusammengesetzt. (N Verschiebungen des Blickfeldes und der korrigierten isoplanatischen Teilfläche 83 durch N Kippungen des Spiegels 9 - Fig. 1a.)

Dieser Vorgang wird so schnell durchgeführt, dass ein Betrachter auf einem Bildschirm 20 der Beobachtungseinrichtung 14 das durch den Online-Computer 17 zusammengesetzte Bild des gesamten Flugzeuges in Echtzeit sieht.

Nachfolgend wird noch einmal mit Hilfe der Fig. 2 bis 5 die Erfindung zusammenfassend erläutert:
Die Fig. 2 und 3 zeigen noch einmal das Bild der Umrisse des zu beobachtenden Flugzeuges 4, wie es die Kamera 13 aufnimmt, wenn keine adaptive Optik vorhanden ist, wobei in Fig. 3 eine Unterteilung des Bildes in N Bildfeldabschnitte 100 angedeutet ist. Bei straken Turbulenzen wird man viele Bildfeldabschnitte wählen, bei schwachen, geringere.

Sobald die adaptive Optik aktiviert wird, erscheint zunächst das Teilbild des Flugzeuges 4 in dem Bildfeldabschnitt scharf, der dem Abschnitt um die optische Achse 21 des Lichtstrahlenbündels 8 entspricht (vgl. auch Fig. 1). Die weiteren N-1 Teilbilder des Flugzeuges bleiben hingegen verschwommen.

Nach Abspeicherung des scharf gestellten Teilbildes in einem Zwischenspeicher, beispielsweise des Online -Computers 17, wird das zweite Lichtstrahlbündel 15 auf dem Wellenfrontsensor 16 soweit seitlich verschoben, dass die Strahlenachse der Korrektur 78 in der Target- bzw. Zielebene 81 um den Durchmesser einer isoplanatischen Teilfläche 82 verschoben wird.

Die Kamera 13 sieht nun in einem benachbarten Bildfeldabschnitt ein weiteres Teilbild des Flugzeuges 4 scharf, während die Teilbilder in den restlichen N-1 Bildfeldabschnitten verschwommen bleiben. Auch dieses scharfe Teilbild wird in einem Speicher des Online-Computers 17 abgelegt.

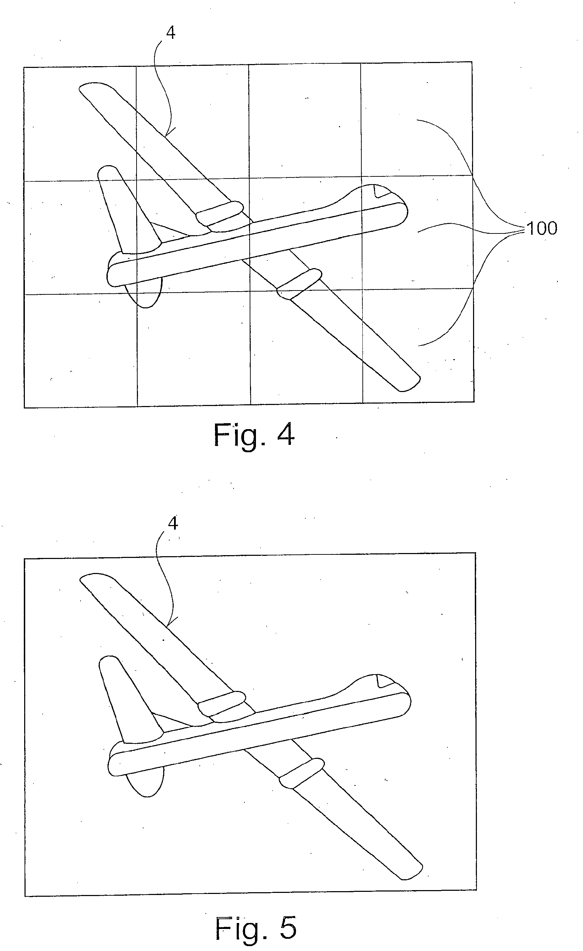

Der gesamte Vorgang wiederholt sich so lange, bis alle sich zeitlich nacheinander ergebenden N scharfen Teilbilder des Flugzeuges erzeugt und abgespeichert sind (angedeutet durch Fig. 4).

Fig. 5 gibt eine Fig. 4 entsprechende Ansicht des Flugzeuges 4 nach Zusammenfügen des Bildes durch den Computer 17 wieder, die auf dem Bildschirm 20 dargestellt wird.

Die Erfindung ist selbstverständlich nicht auf das vorstehend beschriebene Ausführungsbeispiel beschränkt. So muss es sich bei der zur Ansteuerung des Tip/Tilt-Spiegels benötigten Elektronik und dem der Beobachtungseinrichtung 14 zugeordneten Computer nicht um den Online-Computer 17 handeln, sondern es können auch separate Computer verwendet werden.

Ferner können auch mehrere deformierbare Spiegel und zusätzliche Kippspiegel (Tip/Tilt-Spiegel) zur Strahlenstabilisierung verwendet werden.

### Bezugszeichenliste

- 1: optisches Aufklärungssystem
- 2: Laserquelle
- 3: Beleuchtungsteleskop
- 4: Objekt, Flugzeug
- 5: (optische) Vorrichtung
- 6: reflektiertes Laserlicht
- 7: Empfangsteleskop
- 8: Lichtstrahlenbündel
- 9: deformierbarer Spiegel
- 10: Lichtstrahlenbündel
- 11: Strahlteiler
- 12: erstes Lichtstrahlenbündel
- 13: Kamera
- 14: Beobachtungseinrichtung
- 15: zweites Lichtstrahlenbündel
- 16: Wellenfrontsensor
- 17: Online-Computer, Computer, Elektronik
- 18: Spiegel, Tip/Tilt-Spiegel
- 19: Strahlachse
- 20: Bildschirm
- 21: optische Achse
- 77: Systemstrahlachse der Korrektur
- 78: Strahlenachse der Korrektur
- 79: Zentrum des korrigierten Flecks
- 80: Klappwinkel
- 81: Zielebene
- 82: Blickfeld
- 83: korrigierte isoplanatische Teilfläche
- 90: Auftreffpunkt der Strahlenachse bei Kalibrierung
- 91: Auftreffpunkt der Systemstrahlachse nach Kippung P₁
- 100: Bildfeldabschnitt

- Pₒ, P₁: Auftreffpunkte der Strahlachse

## Patentansprüche

1. Verfahren zum Empfangen und Verarbeiten der von einem Objekt (4), beispielsweise einem ausgedehnten Objekt, wie einem Flugkörper, kommenden optischen Signale mittels einer eine adaptive Optik umfassenden optischen Vorrichtung (5), welche die beim Passieren der Atmosphäre aufgrund von Brechungsindex-Schwankungen der Luft auftretenden Störungen der Wellenfronten der optischen Signale kompensiert, wobei die adaptive Optik mindestens einen deformierbaren Spiegel (9) zum Ausgleich der atmosphärischen Wellenfrontstörungen enthält, dem ein Strahlteiler (11) nachgeschaltet ist, von dem ein erstes Lichtstrahlenbündel (12) des von dem deformierbaren Spiegel (9) kommenden Lichtstrahlenbündels (8) in eine Beobachtungseinrichtung (14) gelangt und von dem ein zweites Lichtstrahlenbündel (15) ausgekoppelt und mindestens einem Wellenfrontsensor (16) zur Messung der verbleibenden Störungen der Wellenfront zugeführt wird, wobei die Signale des Wellenfrontsensors (16) mittels eines Online-Computers (17) in Steuersignale umgesetzt und dem deformierbaren Spiegel (9) zugeführt werden, und wobei der Online-Computer (17) derart gewählt wird, dass die Messung und Korrektur der Wellenfrontstörungen mehrmals innerhalb des durch die atmosphärische Zeitkonstante vorgegebenen Zeitabschnittes durchgeführt werden, **dadurch gekennzeichnet,**
**dass** innerhalb des durch die atmosphärische Zeitkonstante vorgegebenen Zeitabschnittes das Bildfeld der optischen Vorrichtung durch Verschiebung der Strahlachse (19) des zweiten Lichtstrahlenbündels (15) auf dem Wellenfrontsensor (16) in N aufeinanderfolgenden Zeitintervallen abgetastet und die Wellenfronten der jeweils innerhalb des isoplanatischen Winkels liegenden N Einzelbilder korrigiert werden und
**dass** die korrigierten N Einzelbilder in dem Speicher eines Computers (17) zunächst zwischengespeichert und anschließend durch den Computer (17) zu einem Gesamtbild zusammengefügt werden.

2. Optische Vorrichtung zur Durchführung des Verfahrens nach Anspruch 1, **dadurch gekennzeichnet, dass** zur Verschiebung der Strahlachse (19) des zweiten Lichtstrahlenbündels (15) auf dem Wellenfrontsensor (16) zwischen dem Strahlteiler (11) und dem Wellenfrontsensor (16) ein durch eine Elektronik (17) ansteuerbarer, um mindestens zwei senkrecht zueinander angeordnete Achsen kippbarer (Tip/Tilt-) Spiegel (18) angeordnet ist.

3. Optische Vorrichtung nach Anspruch 2, **dadurch gekennzeichnet, dass** es sich bei der Elektronik (17) zur Ansteuerung des kippbaren Spiegels (18) um den Online-Computer handelt.

4. Optische Vorrichtung nach Anspruch 2 oder 3, **dadurch gekennzeichnet, dass** es sich bei dem Computer (17) zur Speicherung der Teilbilder und zur Zusammenfügung der Teilbilder zu einem Gesamtbild um den Online-Computer handelt.

## Claims

1. Method for receiving and processing optical signals coming from an object (4), for example an extended object such as a missile, by means of an optical apparatus (5) comprising an adaptive optical unit which compensates disturbances in the wavefronts of the optical signals that occur on account of refractive index variations in the air when passing through the atmosphere, wherein the adaptive optical unit contains at least one deformable mirror (9) for compensating the atmospheric wavefront disturbances, disposed downstream of which there is a beam splitter (11) from which a first light beam (12) of the light beam (8) coming from the deformable mirror (9) reaches an observation device (14) and from which a second light beam (15) is output coupled and fed to at least one wavefront sensor (16) for measuring the remaining disturbances of the wavefront, wherein the signals of the wavefront sensor (16) are converted into control signals by means of an online computer (17) and are fed to the deformable mirror (9) and wherein the online computer (17) is chosen in such a way that the measurement and correction of the wavefront disturbances are performed multiple times within the time period specified by the atmospheric time constant, **characterized**
**in that**, within the time period specified by the atmospheric time constant, the image field of the optical apparatus is scanned by displacing the beam axis (19) of the second light beam (15) on the wavefront sensor (16) in N successive time intervals and the wavefronts of the N individual images, respectively lying within the isoplanatic angle, are corrected and
**in that** the corrected N individual images are initially buffer stored in the memory of a computer (17) and subsequently stitched together to form an overall image by the computer (17).

2. Optical apparatus for carrying out the method according to Claim 1, **characterized in that**, for the purposes of displacing the beam axis (19) of the second light beam (15) on the wavefront sensor (16), a (tip/tilt) mirror (18) which is tiltable about at least two axes arranged perpendicular to one another and which is actuatable by electronics (17) is arranged between the beam splitter (11) and the wavefront sensor (16).

3. Optical arrangement according to Claim 2, **characterized in that** the electronics (17) for actuating the tiltable mirror (18) are the online computer.

4. Optical arrangement according to Claim 2 or 3, **characterized in that** the computer (17) for storing the partial images and for stitching together the partial images to form an overall image is the online computer.

## Revendications

1. Procédé destiné à recevoir et à traiter les signaux optiques provenant d'un objet (4), par exemple un objet volumineux tel qu'un missile, au moyen d'un dispositif optique (5) qui comprend une optique adaptative et qui compense les perturbations que les fronts d'onde des signaux optiques subissent en raison des variations de l'indice de réfraction de l'air lors de leur passage dans l'atmosphère,
dans lequel l'optique adaptative contient au moins un miroir déformable (9) permettant d'égaliser les perturbations atmosphériques des fronts d'onde, en aval duquel est monté un diviseur de faisceau (11), à partir duquel un premier faisceau de rayons lumineux (12) issu du faisceau de rayon lumineux (8), qui provient du miroir déformable (9), atteint un dispositif d'observation (14) et à partir duquel un deuxième faisceau de rayons lumineux (15) est extrait et envoyé vers au moins un capteur de front d'onde (16) destiné à mesurer les perturbations résiduelles du front d'onde, dans lequel les signaux du capteur de front d'onde (16) sont convertis en signaux de commande au moyen d'un ordinateur en ligne (17) et sont envoyés sur le miroir déformable (9), et dans lequel l'ordinateur en ligne (17) est sélectionné de telle manière que la mesure et la correction des perturbations du front d'onde soient effectuées plusieurs fois au cours de l'intervalle de temps déterminé par la constante de temps atmosphérique, **caractérisé en ce que**,
au cours de l'intervalle de temps déterminé par la constante de temps atmosphérique, le champ d'image du dispositif optique est balayé en décalant l'axe de faisceau (19) du deuxième faisceau de rayons lumineux (15) vers le capteur de front d'onde (16) en N intervalles de temps successifs et les fronts d'onde des N images individuelles respectivement situées dans l'angle isoplanétique sont corrigés et
**en ce que** les N images individuelles corrigées sont tout d'abord mises en mémoire tampon dans la mémoire d'un ordinateur (17), puis combinées par l'ordinateur (17) pour former une image intégrale.

2. Dispositif optique destiné à mettre en œuvre le procédé selon la revendication 1, **caractérisé en ce que**, pour décaler l'axe de faisceau (19) du deuxième faisceau de rayons lumineux (15) vers le capteur de front d'onde (16), il est prévu entre le diviseur de faisceau (11) et le capteur de front d'onde (16) un miroir basculant (18) (de type tip-tilt) autour d'au moins deux axes perpendiculaires l'un à l'autre, qui peut être commandé par un système électronique (17) .

3. Dispositif optique selon la revendication 2, **caractérisé en ce que** l'électronique (17) destinée à commander le miroir basculant (18) est l'ordinateur en ligne.

4. Dispositif optique selon la revendication 2 ou 3, **caractérisé en ce que** l'ordinateur (17) destiné à stocker les images partielles et à combiner les images partielles en une image intégrale est l'ordinateur en ligne.
